# EUROPEAN PATENT APPLICATION

(11) **EP 4 534 880 A1**
(43) Date of publication of application: **09.04.2025**
(21) Application number: 24205090.4
(22) Date of filing: 07.10.2024
(51) Int. Cl.: F16L 5/04, A62C 2/04, F16K 17/38, F16L 55/10

(54) **LEAD-THROUGH CONDUIT AND SAFETY DEVICE FOR USE THEREWITH**

(30) Priority: 06.10.2023 NL 2035969
(71) Applicant: Isiflo B.V., 6921 RE Duiven (NL)
(72) Inventor: AARNTZEN, Richardus Hendrikus Arnoldus, 6921 RE DUIVEN (NL); LUKIC, Josip, 6921 RE DUIVEN (NL); BUNTARA, Teddy, 6921 RE DUIVEN (NL)
(74) Representative: Arnold & Siedsma

(57) **Abstract**

The invention relates to a lead-through conduit 1 which is manufactured wholly or partially from plastic and which comprises a first conduit part 3 and a safety device 10 with a shut-off valve 9 connecting thereto. This shut-off valve 9 is accommodated at a distance from a connection point in a second conduit part 6, which is in fluid connection with the first conduit part 3. The second conduit part 6 is surrounded by a jacket 12. Arranged between the shut-off valve 9 and the connection point 8 is a third conduit part 29 which is in fluid connection with the shut-off valve 9 and which is connected in tensively strong manner and/or non-rotatably to the second conduit 6 part or the shut-off valve 9 and the jacket 12.

The invention also relates to a safety device for use in such a lead-through conduit.

## Description

The invention relates to a lead-through conduit which is manufactured at least partially from plastic and which comprises a conduit part and a safety device with a shut-off valve. Such a lead-through conduit is for instance used to connect a gas conduit in a building to an external network of gas conduits. The lead-through conduit protrudes here through an outer wall of the building, and has an outermost end which can be connected to the public gas grid and an innermost end which can be connected to the gas conduit in the building.

Conduits for transport of gas are subject to very strict requirements. It must thus be possible to shut off such conduits quickly and securely in the case of fire. For this purpose it is known to accommodate controllable shut-off valves in lead-through conduits of the above discussed type. These shut-off valves can be controllable both manually and automatically, for instance by means of a heat-sensitive actuator. It is important that the closure of the lead-through conduit is guaranteed for a longer time and at high temperatures. One requirement may for instance be that the shut-off valve is able to withstand a temperature of 650°C for 30 minutes. A shut-off valve which is accommodated in a metal lead-through conduit is able to comply with such a requirement in relatively simple manner, but when the lead-through conduit is manufactured partially of plastic, measures must be taken in order to prevent leakage along or through the shut-off valve from taking place due to melting of conduit parts.

It is known for this purpose not to mount the actual shut-off valve at an outer end of the lead-through conduit, but to accommodate it in the conduit at a distance from the outer end. In the case of fire the shut-off valve and the surrounding part of the conduit are thereby not exposed to the high temperatures prevailing in the building, but are insulated from the fire to some extent by the construction of the wall. Therefore, the shut-off valve and the surrounding part of the conduit are then subjected to lower temperatures, which the plastic is better able to withstand. In this case the shut-off valve is controlled by a control member situated at a distance from the shut-off valve, i.e. inside the building. As stated, this control member can be a manual control member, for instance a handle, but can also take the form of a heat-sensitive actuator, for instance on the basis of a fuse.

Examples of lead-through conduits through (outer) walls for connecting a gas conduit in a building to a public gas grid are described in DE 10 2006 022 641 A1 and EP 2 251 576 A1.

The invention has for its object to further improve a lead-through conduit of the above described type. This is achieved according to the invention by a lead-through conduit which is manufactured at least partially from plastic and which comprises a first conduit part and a safety device connecting thereto, wherein the safety device comprises a shut-off valve which is accommodated in a second conduit part, which is in fluid connection with the first conduit part, at a distance from a connection point, wherein the second conduit part is surrounded by a jacket, and wherein arranged between the shut-off valve and the connection point is a third conduit part which is in fluid connection with the shut-off valve and which is connected in tensively strong manner and/or non-rotatably to the second conduit part or the shut-off valve and the jacket.

The jacket and the distance protect the second conduit part and the shut-off valve of the safety device against high temperatures. When a temperature of 650°C prevails in a building as a result of fire, the temperature can for instance amount to only 80°C at the position of the shut-off valve. This is a temperature that the shut-off valve is able to withstand without problem. The jacket with the second conduit part and the shut-off valve therein forms here as it were a module which can be connected to the first conduit part. The safety device can be constructed in simple manner by connecting the second and third conduit part and the shut-off valve to each other.

In an embodiment of the lead-through conduit according to the invention the shut-off valve is accommodated in an end segment of the second conduit part remote from the first conduit part, at the position of a connection between the second and third conduit part. The shut-off valve can thus be mounted in simple manner before the conduit parts are connected to each other.

In a further embodiment the shut-off valve comprises a closing member moveable in a housing, and the housing comprises two parts which are connected to each other at the position of the connection between the second and third conduit part. The lead-through conduit can thus be assembled from a number of separate components in simple manner, this simplifying and speeding up installation.

In a further embodiment the shut-off valve is controllable by a control member which co-acts therewith and is arranged in the vicinity of the connection point. Making the shut-off valve controllable enables it to be opened or closed as desired from the connection point inside a building.

In another embodiment of the lead-through conduit the closing element can be moveable between an open position lying at a distance from a valve seat and a closing position lying against the valve seat, and the control member can be mechanically connected to the shut-off valve and hold the closing element in its open position during normal operation. A mechanical connection is robust and simple.

In a variant of this embodiment a fuse can be accommodated in the mechanical connection of the control member and the shut-off valve. The control member can hereby release the closing element at high temperatures, so in the case of fire, enabling it to move to its closing position.

In yet another embodiment the closing element can be moveable between an open position lying at a distance from a valve seat and a closing position lying against the valve seat, it can be biased to the open position, and it can be configured to move to the closing position when a fluid flow through the lead-through conduit exceeds a determined value. The shut-off valve can thus function as a flow limiter.

In yet another embodiment the closing element can be moveable between an open position lying at a distance from a valve seat and a closing position lying against the valve seat, and it can be biased to the closing position. The shut-off valve can thus function as non-return valve.

When the shut-off valve is used as flow limiter or as non-return valve, the above discussed fire safety measures, such as the presence of a jacket or the ample distance to the interior of a building, are otherwise not strictly necessary. The lead-through conduit can therefore also be of simpler construction.

The closing element can further comprise or be manufactured from a relatively hard material, such as metal, glass or a construction plastic such as polyamide, while the valve seat can comprise or consist of a somewhat softer material, such as rubber or an elastomer. On the other hand, it is possible to envisage a closing element of a softer material being combined with a valve seat of a harder material.

In an embodiment the closing element can be spherical and can be received in freely movable manner in the housing of the shut-off valve. The spherical shape provides for optimal flow conditions and a minimal pressure loss over the shut-off valve, while a uniform closure is ensured in every position of the closing element.

In an embodiment of the lead-through conduit according to the invention the jacket is connected in tensively strong manner and/or non-rotatably to a lead-through sleeve surrounding the first conduit part. The jacket and the lead-through sleeve thus form a robust outer side of the lead-through conduit, whereby the first and second conduit part are protected. In so-called "dry" installation of the lead-through conduit in the wall an end part of the jacket lying opposite the connection point can be connected to the lead-through sleeve. In so-called "wet" installation however, the lead-through sleeve can be connected to an end part of the jacket facing toward the connection point. In that case the jacket is surrounded wholly by the lead-through sleeve, which can have an enlarged diameter at the position of the jacket. In the case of a possible leak at the position of the shut-off valve the gas leaking away can be guided away via the lead-through sleeve to the outer side of the building.

In a further embodiment the first conduit part and the second conduit part are connected to each other in tensively strong manner and non-rotatably. The lead-through conduit thus forms a strong whole which is able to withstand loads occurring in practice without failing or developing a leak.

In an embodiment the shut-off valve can be received in a locally widened segment of the second conduit part. On one hand, this creates space for a relatively large and robust shut-off valve, and the second conduit part with the shut-off valve therein is thus additionally fixed in the jacket.

The jacket can here have a non-rotation-symmetrical cross-section, at least locally. Because the jacket has at least locally a cross-section which is not symmetrical relative to a centre line of the lead-through conduit, it can be oriented optimally and fixed non-rotatably. The non-rotation-symmetrical cross-section can be achieved by arranging one or more ribs running in longitudinal direction of the lead-through conduit and protruding from the jacket. The jacket can otherwise also have one or more ribs running in transverse direction of the lead-through conduit, whereby the lead-through conduit can be mounted in tensively strong manner.

As stated above, the lead-through conduit is manufactured at least partially from plastic. In an embodiment of the invention at least the second conduit part and the jacket are manufactured from plastic. After installation of the lead-through conduit in the wall, these components are located closest to the interior of the building, and are therefore exposed to high temperatures in the case of fire.

In addition, the first conduit part and the lead-through sleeve can also be manufactured from plastic. A lead-through conduit manufactured almost wholly from plastic is thus obtained, which can be manufactured at lower cost than a metal lead-through conduit and is also easier to assemble. A plastic lead-through conduit furthermore requires less maintenance and is better able to withstand ambient influences than a metal conduit.

In an embodiment the shut-off valve and the second conduit part can be embedded in the jacket. The jacket can for instance be arranged round the shut-off valve and the second conduit part by injection moulding. A robust embodiment of the safety device is hereby obtained, which is leak-tight and can furthermore be manufactured at relatively low cost. The third conduit part can also be wholly or partially embedded in the jacket.

A protruding end part of the first conduit part can here also be embedded in the jacket. In this way the different components of the lead-through conduit can be connected firmly and reliably to each other.

In a further embodiment the third conduit part can have a relatively thick wall, as well as a lining of a material with a lower melting point than the material of the wall. Because this lining melts first at high temperatures, so in the case of fire, a barrier is formed against further spreading of heat to the shut-off valve, while the lead-through conduit can be closed by the melted material of the lining. The temperature at the position of the shut-off valve can thus be limited to about 20°C, even when the temperature in the building amounts to about 650°C. The shut-off valve functions normally at such a temperature. The third conduit part can otherwise also be given a more limited wall thickness when this conduit part is also accommodated in the jacket surrounding the second conduit part and the shut-off valve.

According to an embodiment, the lead-through conduit further comprises a cover element which surrounds the safety device and/or the lead-through sleeve and which has a greater diameter than the safety device or the lead-through sleeve. An opening formed in the wall for leading the lead-through conduit therethrough is concealed from view by such a cover element. In addition, the cover element can be used to fix the lead-through conduit in that the cover element can be mounted on the wall.

For this purpose the safety device can have at an end facing toward the control member a flange with a diameter greater than a diameter of a passage opening in the cover element. With this flange the cover element can be retained between the end of the lead-through conduit and the wall.

The lead-through conduit can additionally or instead be provided with a retaining element which is displaceable thereover and which co-acts with the cover element. Such a retaining element can be slid onto an end of the lead-through conduit after the cover element has been slid thereover, and can thus fix the cover element against the wall. The retaining element itself can then be fixed on the lead-through conduit, for instance by screws or a clamp.

When the cover element determines an internal volume and is provided with a filling opening for a filler, a space between an edge of the opening in the wall and the outer periphery of the lead-through conduit can be filled via the cover element with liquid filler, for instance mortar. After hardening of this filler the lead-through conduit is then fixed in the wall, the integrity of the wall additionally being restored.

In order to position, particularly to centre, the lead-through conduit in the passage opening in the wall, it can further be provided with at least one centring member arranged round the safety device or the lead-through sleeve. In practice, two or more centring members can be arranged round the lead-through conduit at different positions, distributed in longitudinal direction.

The invention further relates to a safety device for use in a lead-through conduit of the above described type.

The invention is now elucidated on the basis of a number of examples, wherein references made to the accompanying drawing in which corresponding components are designated with reference numerals increased by 100 at a time, and in which:
Fig. 1 is a schematic representation of the most important components of a lead-through conduit according to the invention,
Fig. 2 is a longitudinal section through a first embodiment of the lead-through conduit according to the invention in installed state;
Fig. 3 is a perspective view of the lead-through conduit of Fig. 2, as seen from the side which is located outside a building in mounted state;
Fig. 4 is a partially cut-away detail view on enlarged scale as according to arrow IV in Fig. 3;
Fig. 5 is a detail view corresponding with Fig. 4, as seen from the side which is located inside a building in mounted state;
Fig. 6 is a side view of a part of a lead-through conduit according to a second embodiment of the invention;
Fig. 7 is a longitudinal section through the lead-through conduit of Fig. 6;
Fig. 8 is a detail view on enlarged scale as according to arrow VIII in Fig. 7;
Fig. 9 is a perspective vertical longitudinal section through a part of the lead-through conduit which is located inside a building in mounted state;
Fig. 10 is a perspective horizontal longitudinal section through the part of the lead-through conduit shown in Fig. 9;
Fig. 11 is a side view of a whole lead-through conduit of Fig. 6-10 in installed state;
Fig. 12 is a view corresponding with Fig. 11 of a third embodiment of the lead-through conduit in combination with a system for "dry" installation thereof;
Fig. 13 is a longitudinal section through the lead-through conduit of Fig. 12;
Fig. 14 is a view corresponding with Fig. 13 of a fourth embodiment of the lead-through conduit in combination with a system for "wet" installation thereof;
Fig. 15 is a longitudinal section through the lead-through conduit of Fig. 14;
Fig. 16 is a schematic representation of a shut-off valve functioning as flow limiter for use in the lead-through conduit; and
Fig. 17 is a schematic representation of a shut-off valve functioning as non-return valve for use in the lead-through conduit.

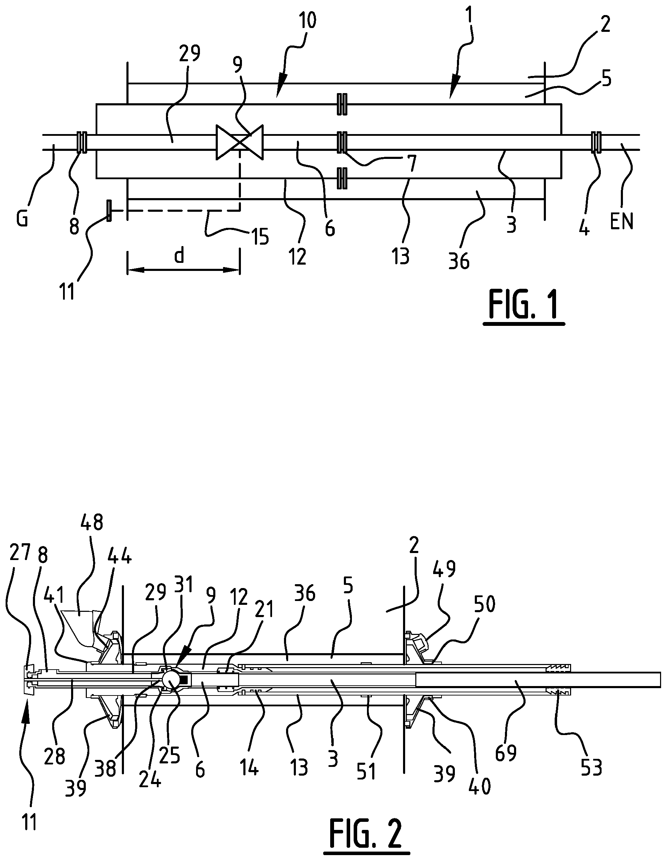

A lead-through conduit 1, which is for instance used to connect a gas conduit G in a building to an external network EN, protrudes here through an outer wall 2 of the building (Fig. 1). The lead-through conduit 1 comprises a first conduit part 3 which protrudes from a connection point 4 outside the building into an opening 5 in wall 2, and a second conduit part 6 which is connected to the first conduit part 3. The second conduit part 6 extends from the connection 7 to the first conduit part further through the opening 5 and is connected to a third conduit part 29, which debouches in a connection point 8 on an inner side of wall 2.

Accommodated in the second conduit part 6 is shut-off valve 9 which forms part of a safety device 10. The shut-off valve 9 is arranged at the end of the second conduit part 6, at the position of a connection of this second conduit part 6 to the third conduit part 29. In the shown example the shut-off valve 9 is a controllable shut-off valve which can be controlled via a connection 15 by a control member 11, which is arranged at a distance from shut-off valve 9. In the shown example this control member 11 is located inside the building, close to connection point 8. The controllable shut-off valve 9 is located in the opening 5 in wall 2 at a distance d from the interior of the building, and so remains protected against external influences, particularly high temperatures in the case of fire in the building. The control member 11 can be configured for manual operation, and for instance comprise a rotary knob or handle, although it can also be envisaged that the control member 11 works automatically, for instance when it is exposed to high temperatures.

The second conduit part 6 and the third conduit part 29 are here surrounded by a jacket 12. This jacket 12 contributes to the controllable shut-off valve 9 being protected against high temperatures. In this example the jacket 12 is connected to a lead-through sleeve 13 which surrounds the first conduit part 3. Lead-through conduit 1 is thus double-walled over its whole length. For this purpose an end part 14 of jacket 12 remote from the connection point 8 and the control member 11 takes a narrowing form here (Fig. 2), and has an outer diameter corresponding with the inner diameter of the lead-through sleeve 13, so that this end part 14 can be received close-fittingly in the lead-through sleeve 13. An annular space 16 is here left clear between the first conduit part 3 and the lead-through sleeve 13, while in the shown example the second and third conduit part 6, 29 with the controllable shut-off valve 9 are embedded in jacket 12.

In the shown example the second conduit part 6 and the jacket 12 are manufactured from plastic, as are the first conduit part 3 and the lead-through sleeve 13. The jacket 12 can for instance be manufactured from LDPE, and be cast round the second conduit part 6 and the shut-off valve 9 in a mould. The first and second conduit part 3, 6 and the lead-through sleeve 13 can also be manufactured from polyethylene.

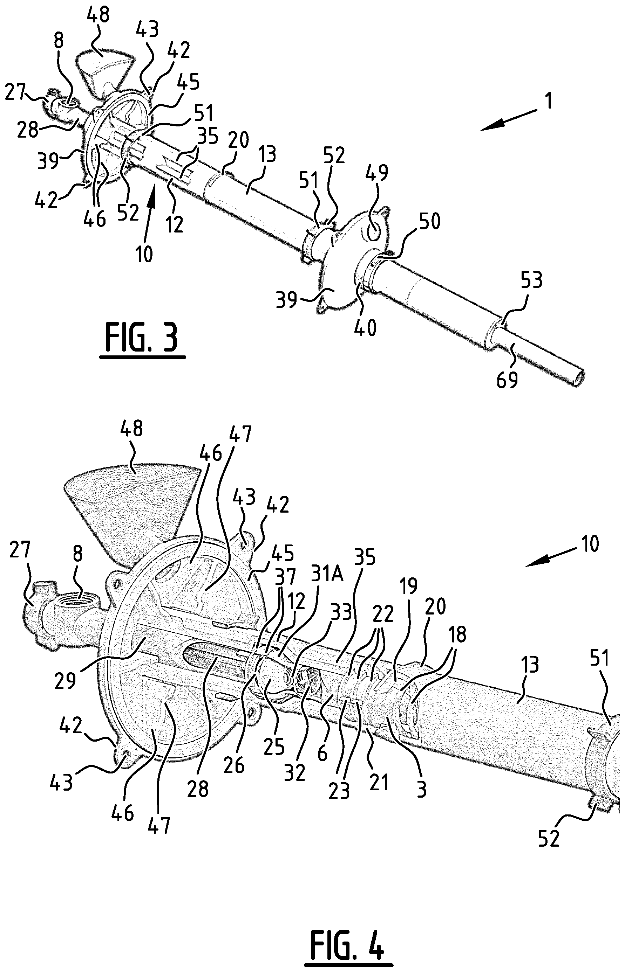

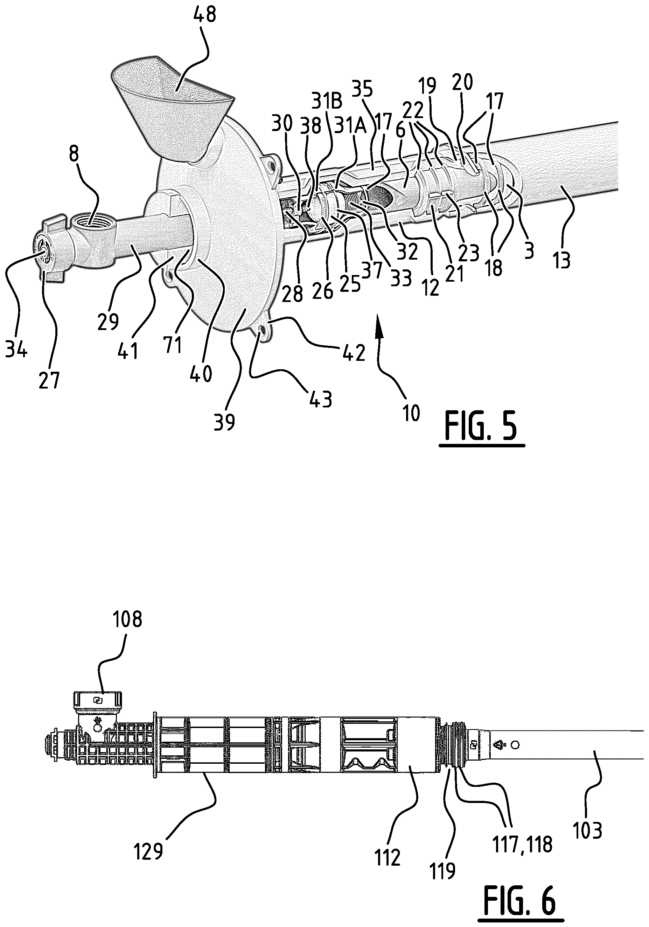

The end part 14 of jacket 12 is provided with grooves 17 in which O-rings 18 are received, and with a groove 19 in which is received a fastening clip 20 which protrudes through a gap in the lead-through sleeve 13 (Fig. 4, 5). Jacket 12 is thus connected in tensively strong manner and non-rotatably to lead-through sleeve 13. An end part 21 of first conduit 3 is widened and fits closely round an end part of second conduit part 6. The widened end part 21 further also has several transverse ribs 22 and longitudinal ribs 23, and is embedded with the second conduit part 6 in jacket 12. The first conduit part 3 and the second conduit part 6 are thus also connected to each other in tensively strong manner and non-rotatably. The first conduit part 3 can otherwise in addition to the shown segment with widened end part 21 also have a simple, straight segment 69 welded thereto and extending up to the connection point 4 on the external network EN.

In the shown example the shut-off valve 9 is accommodated in a locally widened end segment 24 of the second conduit part 6. The shut-off valve 9 comprises here a closing element 25 which is movable between the shown open position, in which it lies at a distance from a valve seat 26, and a closing position in which the closing element 25 lies against the valve seat 26. The valve seat 26 is here arranged downstream of the closing element 25, whereby closing element 25 is urged into its closing position by a gas flow in lead-through conduit 1. During normal operation of safety device 10 the closing member is however held in its open position by control member 11.

In the shown example the control member 11 comprises a rotary knob 27 at the end of lead-through conduit 1, and the connection 15 to the closing element 25 is formed by a shaft 28. The rotary knob 27 has here an internal thread which is screwed onto an external thread on the end of lead-through conduit 1. In the shown example the shaft 28 runs through the third conduit part 29, which is connected to the shut-off valve 9 and the second conduit part 6. The shaft 28 is here mounted in bearing bracket 30, which forms part of a housing 31 of shut-off valve 9. An outer end 38 of the shaft presses against the closing element 25. By rotating knob 27 in counter-clockwise direction the shaft 28 is moved toward the end of lead-through conduit 1, and closing element 25 is pressed against the valve seat 26 by the gas flow, this closing the lead-through conduit 1 gas-tightly.

The third conduit part 29 is likewise connected in tensively strong manner and non-rotatably to shut-off valve 9 and to the second conduit part 6 in that it is embedded with these two other components in jacket 12. The housing 31 of shut-off valve 9 otherwise consists here of two parts 31A, 31B which are connected to each other at the position of the connection between the second and third conduit part 6, 29. For sealing purposes O-rings 37 are also arranged between the housing parts 31A, 31B and the conduit part 6, 29. The housing half 31A lying upstream is provided here with a spring bracket 32, which carries a compression spring 33 which engages on closing element 25 and urges it to its closing position. This compression spring 33 serves to close the shut-off valve 9 rapidly when knob 27 is turned, also when the gas flow is relatively small. Compression spring 33 also serves to keep the shut-off valve closed if the gas pressure on the outer side, so in the external network EN, were to drop out wholly or partially.

In the shown example the safety device 10 further comprises a fuse 34 which ensures that shut-off valve 9 is closed when the temperature in the building becomes too high, such as in the case of fire. The fuse 34 is here accommodated in the connection 15 between control member 11 and shut-off valve 9, particularly between rotary knob 27 and shaft 28 (Fig. 5). When fuse 34 blows, which occurs at a temperature in the order of 80-100°C, the shaft 28 is no longer held in rotary knob 27. The shaft 28 then cannot hold closing element 25 in the open position, and closing element 25 is pressed against the valve seat 26 by the gas flow, while shaft 28 is moved toward the end of lead-through conduit 1.

Closing element 25 has a streamlined shape in order to limit flow losses at the position of shut-off valve 9 as far as possible. In the shown example the lead-through conduit 1 has a round cross-section, valve seat 26 is circular and closing element 25 is rotation-symmetrical, so that the flow is as uniform as possible over the whole cross-section of the conduit. Closing element 25 is even spherical here, so that it is also symmetrical in the flow direction, for an even more uniform gas flow. Closing element 25 is here freely rotatable in housing 31.

In this embodiment the closing element 25 is manufactured from a relatively hard material, such as metal, glass or a construction plastic such as polyamide, while the valve seat 26 consists here of a somewhat softer material, such as rubber or an elastomer.

In the shown example the jacket 12 has a uniform thickness, and thus follows the contour of the first and second conduct part 3, 6 and the shut-off valve 9. Jacket 12 therefore has a maximal diameter at the position of widened portions 21, 24, while the diameter is smaller therebetween. Longitudinal ribs 35 are formed between the widened portions, resulting in jacket 12 having a non-rotation-symmetrical cross-section at these locations. Jacket 12 can thus be mounted non-rotatably in a layer of mortar 36 with which the opening 5 in wall 2 is filled up after placing of lead-through conduit 1.

For the purpose of closing the opening 5 in wall 2 the lead-through conduit 1 is here provided close to its ends with two cover elements 39 which enclose respectively the safety device 10 and the lead-through sleeve 13. Each cover element 39 has a truncated cone shape here, with an upright edge 40 which bounds each continuous opening 71. Safety device 10 has a flange 41 with a diameter which is greater than the diameter of the opening 71 (Fig. 5). The cover element 39 is thus retained between the flange 41, this forming part of jacket 12 here, and the wall 2. Cover element 39 is further provided with tongues 42 with openings 43 whereby the cover element 39 can be mounted on wall 2 with screws or bolts.

Each cover element 39 is further provided here with a filling opening 44 through which mortar can be poured into an internal volume defined by cover element 39 and wall 2. Because this volume is connected to opening 5, the space around lead-through conduit 1 can thus be filled up. This is known as "wet" installation of lead-through conduit 1. In order to prevent the mortar from leaking away, each cover element 39 is also provided with a gasket 45 extending along the whole periphery (Fig. 4). Each cover element 39 is further provided here with a number of radial strengthening ribs 46. These ribs 46 each have a recess 47 here in order to enable a free flow of the mortar through the internal volume of cover element 39. For the purpose of supplying mortar use can be made of a filling funnel 48, which can be placed in the filling opening 44. After filling, filling opening 44 can be closed with a cap 49.

Where the position of cover element 39 on the inner side of the building relative to safety device 10 is fixed by flange 41, the position of cover element 39 on the outer side of the building is defined by a loose retaining ring 50 (Fig. 3). This retaining ring 50 can be slid over the end of lead-through sleeve 13 and can then be fixed at a desired position, whereby the outer cover element 39 is retained between ring 50 and wall 2. The end of lead-through sleeve 13 is otherwise also closed here by an annular plug 53.

As stated, the jacket 12 of safety device 10 is retained non-rotatably in the mortar 36 owing to the presence of the longitudinal ribs 35. In order also to achieve a good attachment between the mortar 36 and the lead-through sleeve 13, this sleeve can have a rough surface on its outer side. The size of the diameter of opening 5, and thereby the thickness of the layer of mortar 36 in Fig. 1 and Fig. 2, is otherwise exaggerated for the sake of clarity. In practice the diameter of opening 5 is not much greater than that of lead-through conduit 1. Lead-through conduit 1 can therefore be provided with centring members 51, here formed by rings with spacers 52 which support against an edge of opening 5. The excess of opening 5 is therefore roughly equal to the height of the spacers 52.

As stated, lead-through conduit 1 is intended to connect an external network EN to a gas conduit G in a building. In this example the third conduit part 29 is for this purpose provided close to its free outer end with the connection point 8, here in the form of a tapped hole with internal thread in a side wall of the conduit part.

Fig. 6-11 show an alternative embodiment of the lead-through conduit 101. This embodiment also comprises a first conduit part 103 and a safety device 110, this in turn comprising a second conduit part 106, a controllable shut-off valve 109 and a jacket 112.

The shut-off valve 109 is embodied slightly differently than in the first embodiment. The housing 131 consists here of a narrower part 131A lying upstream and protruding into a wider part 131B lying downstream. For sealing between the two housing parts 131A, 131B an O-ring 161 is received in a groove 162 in the narrower housing part 131A. This upstream housing part 131A once again comprises a spring bracket 132, which is here provided with a streamlined body 154. The spring bracket 132 once again carries a compression spring 133, which in this example does not engage on the outer surface of the closing element 125 but intrudes into a recess 155 of the closing element.

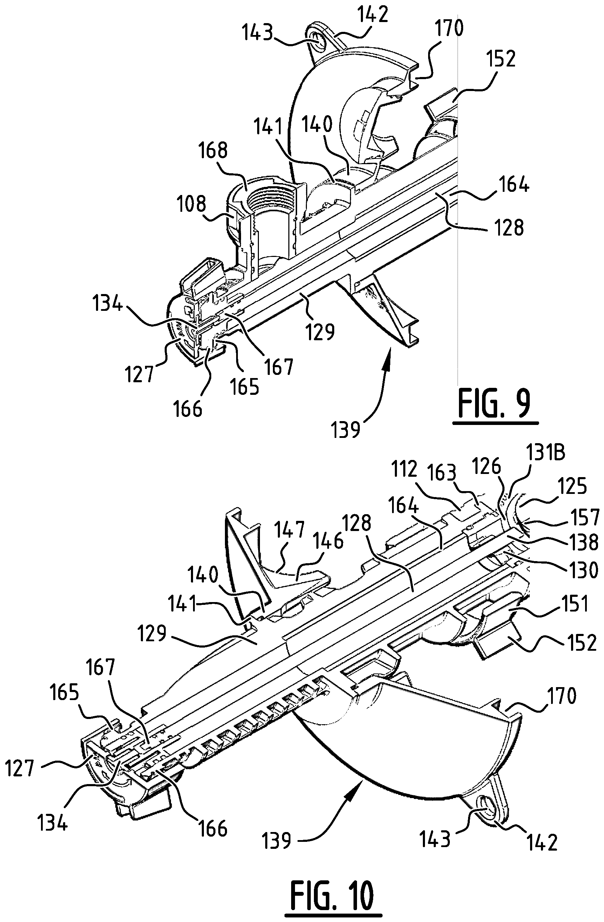

The compression spring 133 there engages on an insert 156 of a rigid material, for instance stainless steel or a polymer. This rigid insert 156 serves to prevent the sealing action of closing element 125, which is here manufactured from rubber, from decreasing over time as a result of relaxation of the material. The shaft 128 forming the connection 115 between the control member 111 and the shut-off valve 109 can here once again support with its outer end 138 on an end surface 157 of the insert (Fig. 10), but could also be connected thereto mechanically.

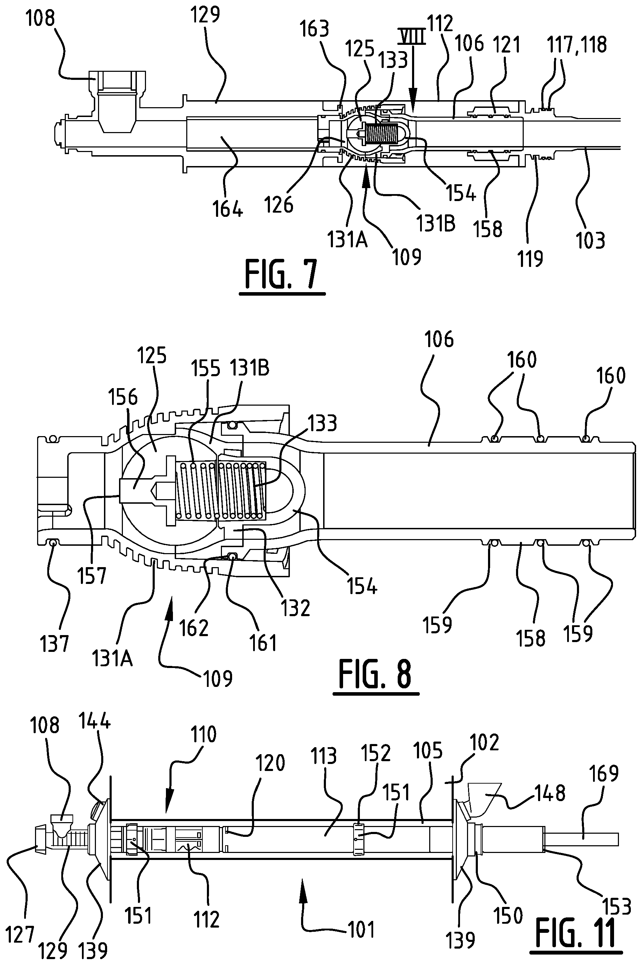

The second conduit part 106 is here provided close to its free outer end with a thickened portion 158, in which grooves 159 are formed by O-rings 160 (Fig. 8). The second conduit part 106 can hereby be received sealingly in the widened outer end 121 of the first conduit part 103. This widened outer end 121 is once again per se embedded in jacket 112. For a sealing connection of the lead-through sleeve 113 to the jacket 112 of the safety device 110 the first conduit part 103 is provided here with grooves 117 with O-rings 118 therein, while the tensively strong connection is provided for by a groove 119 and a fastening clip 120 (Fig. 11).

In the shown example the third conduit part 129 is not embedded wholly in jacket 112, but only with an outer end which has a flange 163 (Fig. 7, 10). A tensively strong and non-rotatable connection is thus still formed between the third conduit part 129 on one side and the second conduit part 106 and the shut-off valve 109 on the other. The third conduit part 129 is here embodied with a relatively thick wall, so that the outer diameter thereof corresponds with that of jacket 112 and lead-through sleeve 113, while the actual conduit has a similar inner diameter as the first and second conduit part 103, 106.

The inner diameter of the third conduit part 129 is determined here by a lining 164 accommodated therein and manufactured from a different material than the surrounding parts of the lead-through conduit 101 (Fig. 7, 9, 10). The material of the lining 164 particularly has a lower melting point than the material of the wall of the third conduit part 129. In the shown example the third conduit part can be manufactured from polyamide (PA), while the lining can be manufactured from polyethylene (PE). When the third conduit part 129, which lies closest to the interior of the building, is exposed to high temperatures as a result of fire, the lining 164 will melt and therein form a barrier whereby shut-off valve 109 is protected against high temperatures. Depending on the manner in which lining 164 melts, it can even close the third conduit part 129 wholly or partially.

In this embodiment it can be seen that the rotary knob 127 of control member 111 is provided with internal thread (a single winding 165), which co-acts with external thread 166 on the outer end of the third conduit part 129 (Fig. 9, 10). It can further be seen that the fuse 134 is accommodated in the rotary knob 127 and engages on an outer end 167 of shaft 128 which is mounted slidably in rotary knob 127. When fuse 134 blows, shaft 128 can slide through the rotary knob in its longitudinal direction and closing element 125 is no longer held in its open position, whereby the gas flow is interrupted. It can also be seen that the flange 141 whereby cover element 139 is retained forms part here of the third conduit part 129, and that the connection point 108 is provided with a sleeve 168 with internal thread received non-rotatably therein. Finally, a groove 170 in which the gasket (not shown here) can be received is shown in cover element 139.

This embodiment of the lead-through conduit 101 further has largely the same components as the first embodiment, as can also be seen in Fig. 11.

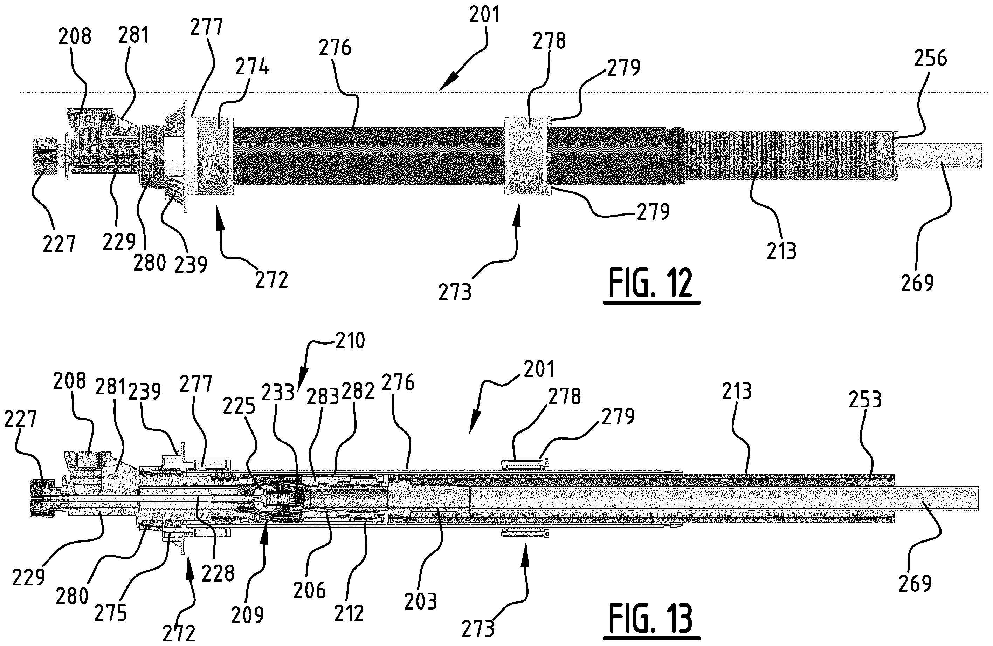

A third embodiment of the lead-through conduit 201, which is shown in Fig. 12 and 13, is suitable for a so-called "dry" installation. Safety device 210 is here provided on the inward-directed outer end of lead-through conduit 201 with an installation element 272 with a protruding collar 239, which can be received close-fittingly in an opening in a wall covering on the inner side of a building. The lead-through sleeve 213 is provided with an annular installation element 273 which can be received close-fittingly in an opening in a wall covering on the outer side of the building. The inner installation element 272 has an annular part 277 which connects against the collar 239. This annular part 277 and the annular installation element 273 each have an inner diameter greater than an outer diameter of respectively the safety device 201 and the lead-through sleeve 213. Arranged between the installation elements 272, 273 and the lead-through conduit 201 is an installation sleeve 276 which, in the shown example, extends outward beyond the annular installation element 273.

The annular part 277 of the inner installation element 272 is provided on its periphery with an expansion socket 274, which can be tensioned by means of screws (not shown here) to clamp the installation element 272 fixedly in the opening in the inner wall covering. The screws are for this purpose tightened in screw holes 275 in the collar 239. Similarly, the outer installation element 273 is provided on its periphery with an expansion socket 278. This expansion socket 278 is likewise tensioned by means of screws 279 to clamp the installation element 273 fixedly in the opening in the outer wall covering. The installation elements 272, 273 and the installation sleeve 276 can form part of a house lead-in package from the Doyma GmbH & Co company (www.dovma.de).

Arranged in this third embodiment between an inner periphery of the collar 239 of the inner installation element 272 and an outer periphery of the third conduit part 229 of lead-through conduit 201 is another sealing system 280 which is constructed from a plurality of rings and which protrudes into the space. A stiffening rib 281 is further formed here between the third conduit part 229 and the connection point 208.

In this third embodiment of lead-through conduit 201 the jacket 212 is embodied slightly differently than in the first and second embodiment. As can be seen in Fig. 13, jacket 212 is formed by a thin-walled tube 282 with inward-protruding flanges which form a connection to the first and third conduit part 203 and 229, respectively. Inside the tube 282 a space 283 is formed around the second conduit part 206 and shut-off valve 209, which space is filled with a sealing synthetic resin, particularly an expanding synthetic resin such as for instance Tangit M3000 by Henkel (www.tangit.com). The first, second and third conduit part 203, 206, 229 and the shut-off valve 209 are hereby once again connected to each other in tensively strong manner and non-rotatably. A seal 284 is further also formed between the grooved segment of the third conduit part 229 lying adjacently of jacket 212 and the installation sleeve 276.

This embodiment of the lead-through conduit 201 further has largely the same components as the first and second embodiment.

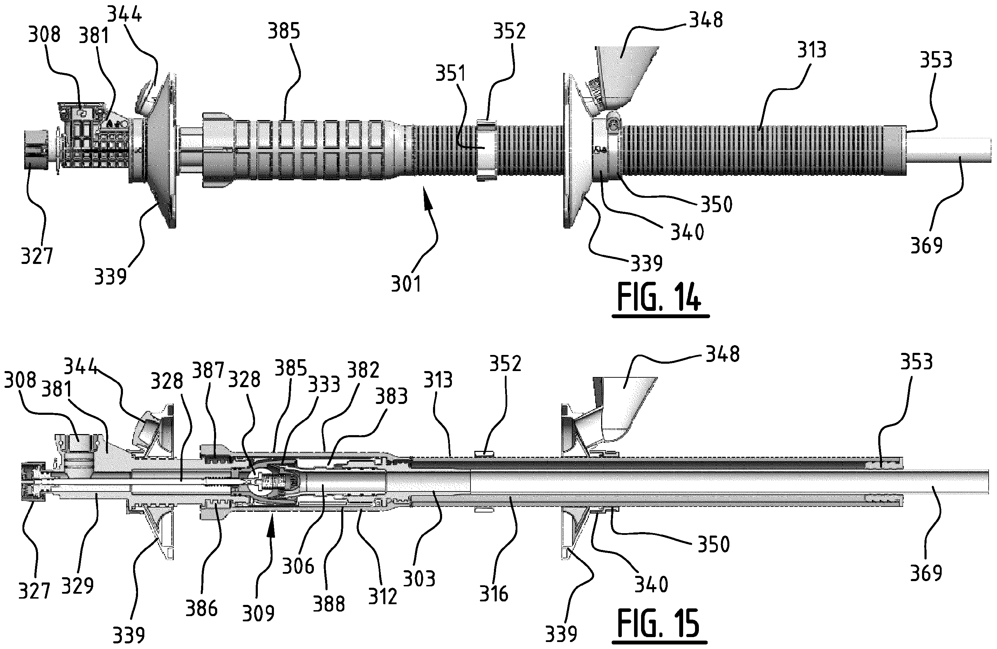

A fourth embodiment of the lead-through conduit 301, which is shown in Fig. 14 and 15, is once again suitable for so-called "wet" installation. This lead-through conduit 301 is distinguished from the lead-through conduits 1, 101, 201 according to the above discussed embodiments, particularly by the embodiment of the inward-directed end part 385 of the lead-through sleeve 313. This end part 385 has a greater diameter than the rest of the lead-through sleeve 313, and extends in the direction of the inner side of the building, beyond the shut-off valve 309. In this embodiment the tensively strong and non-rotatable connection between the first and second conduit part 303, 306 and the seal associated therewith are formed on the side of the second conduit part 306 facing toward the connection point 308.

The connection is in fact indirect, in the sense that the end part 385 of the lead-through sleeve 313 is connected to the third conduit part 329, this in turn being connected to the second conduit part 306. For this purpose a separate ribbed connecting element 386 is arranged around the grooved segment of the third conduit part 329 lying adjacently of the jacket 312. This connecting element 386 is fixed in the widened end part 385 of the lead-through sleeve 313.

A seal 387 is further formed at the position of the connection between the widened end part 385 of the lead-through sleeve 313 and the third conduit part 329. An annular space 388, which is connected to the annular space 316 between lead-through sleeve 313 and first conduit part 303, is formed between the widened end part 385 of lead-through sleeve 313 and the jacket 312 enclosed thereby. In the case of a leak, gas can hereby be discharged outside via the annular intermediate spaces 388 and 316, which are insulated from the inner side of the building by the seal 387.

This embodiment of the lead-through conduit 301 further has largely the same components as the three embodiments described above.

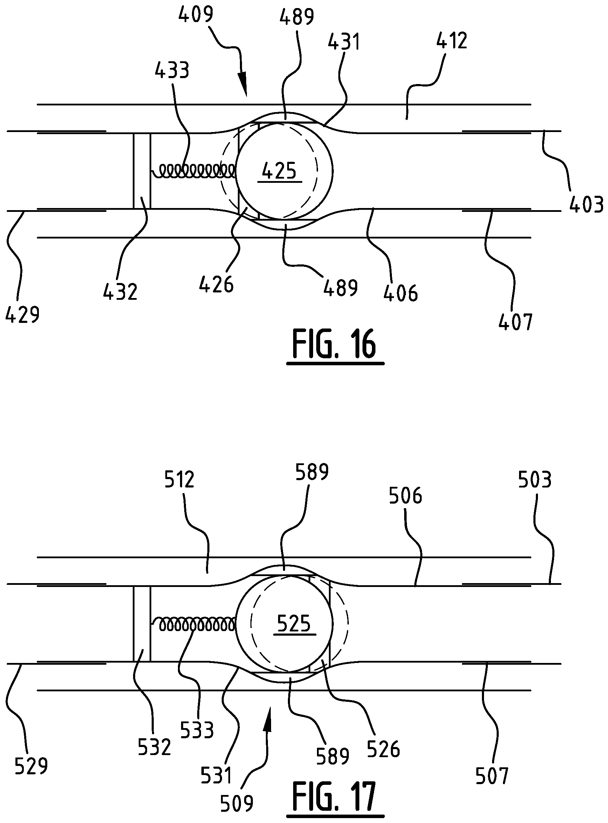

Instead of a controllable shut-off valve as described above, it is also possible to envisage the shut-off valve 409 functioning as passive flow limiter, as can be seen in Fig. 16. The shut-off valve 409 comprises here a spherical closing element 425 which is freely movable in the housing 431 (which is shown schematically as a whole here, but can once again consist of two parts 431A, 431B). The shut-off valve 409 is shown here between the second conduit part 406 and the third conduit part 429, and is surrounded by the jacket 412. Closing element 425 is biased to a position at a distance from the valve seat 426 by the compression spring 433, which is attached with an outer end to the spring bracket 432. The closing element 425 is conversely urged toward the valve seat 426 by the pressure of the gas flow in lead-through conduit 401. The movement of closing element 425 is guided here by number of radially distributed guide ribs 489.

The biasing force of compression spring 433 is chosen such that closing element 425 moves toward the valve seat and so reduces the throughflow area of conduit 401 when the flow rate of the gas flow is in danger of becoming too high. When the flow rate then decreases, closing element 425 moves away from valve seat 426 again and the throughflow area increases again. When a maximum permissible flow rate in lead-through conduit 401 is in danger of being exceeded, shut-off valve 409 can even be closed entirely by the pressure of the gas flow, as shown with broken lines. The dimensions of compression spring 433 are chosen such that closing element 425 always remains clear of an inflow end of the housing 431 on the side of the second conduit part 406, also when the gas flow is minimal.

In yet another variant the shut-off valve 509 could also function as non-return valve, as shown in Fig. 17. A spherical closing element 525 can here once again be freely movable between guide ribs 589 in the housing 531. The closing element 525 is here biased to valve seat 526, which is located at the inflow end of the housing 531, by the compression spring 533 attached to the spring bracket 532. The closing element 525 is conversely urged away from the valve seat 526, toward the spring bracket 532 and the third conduit part 529, by the pressure of the gas flow in lead-through conduit 501.

The biasing force of compression spring 533 is here chosen such that closing element 525 is pressed against the valve seat and closes the lead-through conduit 501 when the gas pressure or the flow rate of the gas flow drops below a minimum value, as shown in dotted lines.

Although the invention has been elucidated above on the basis of a number of embodiments, it will be apparent that it is not limited thereto but can be varied in many ways. A pressure-sensitive failing member could thus for instance be accommodated in the safety device instead of or in addition to a fuse. The closing element is then urged to its closing position by failure of such a pressure-sensitive member at a high pressure. In this way the shut-off valve could function as pressure relief device. The materials used can further be varied, while the design and dimensioning of the different components can also be chosen differently than shown here. Instead of a spherical form, other streamlined forms would also be suitable for the closing element.

The scope of the invention is therefore defined solely by the following claims.

## Claims

1. Lead-through conduit which is manufactured at least partially from plastic, comprising a first conduit part and a safety device connecting thereto and comprising a shut-off valve, wherein the shut-off valve is accommodated in a second conduit part, which is in fluid connection with the first conduit part, at a distance from a connection point, wherein the second conduit part is surrounded by a jacket, and wherein arranged between the shut-off valve and the connection point is a third conduit part which is in fluid connection with the shut-off valve and which is connected in tensively strong manner and/or non-rotatably to the second conduit part or the shut-off valve and the jacket.

2. Lead-through conduit according to claim 1, wherein the shut-off valve is accommodated in an end segment of the second conduit part remote from the first conduit part, at the position of a connection between the second and third conduit part.

3. Lead-through conduit according to claim 1 or 2, wherein the shut-off valve comprises a closing member moveable in a housing, and wherein the housing comprises two parts which are connected to each other at the position of the connection between the second and third conduit part.

4. Lead-through conduit according to any one of the foregoing claims, wherein the shut-off valve is controllable by a control member which co-acts therewith and is arranged in the vicinity of the connection point.

5. Lead-through conduit according to claim 3 or 4, wherein the closing element is moveable between an open position lying at a distance from a valve seat and a closing position lying against the valve seat, and wherein the control member is mechanically connected to the shut-off valve and holds the closing element in its open position during normal operation, and optionally
wherein a fuse is accommodated in the mechanical connection of the control member and the shut-off valve.

6. Lead-through conduit according to claim 3 or 4, wherein the closing element is moveable between an open position lying at a distance from a valve seat and a closing position lying against the valve seat, is biased to the open position, and is configured to move to the closing position when a fluid flow through the lead-through conduit exceeds a determined value.

7. Lead-through conduit according to claim 3 or 4, wherein the closing element is moveable between an open position lying at a distance from a valve seat and a closing position lying against the valve seat, and is biased to the closing position.

8. Lead-through conduit according to any one of the claims 3-7, wherein the closing element is spherical and is received in freely movable manner in the housing.

9. Lead-through conduit according to any one of the foregoing claims, wherein the jacket is connected in tensively strong manner and/or non-rotatably to a lead-through sleeve surrounding the first conduit part, and/or
wherein the first conduit part and the second conduit part are connected to each other in tensively strong manner and non-rotatably.

10. Lead-through conduit according to any one of the foregoing claims, wherein the shut-off valve is received in a locally widened segment of the second conduit part, and/or
wherein the jacket has a non-rotation-symmetrical cross-section, at least locally.

11. Lead-through conduit according to any one of the foregoing claims, wherein at least the second conduit part and the jacket are manufactured from plastic, and/or
wherein the first conduit part and the lead-through sleeve are manufactured from plastic, and optionally
wherein the shut-off valve and the second conduit part are embedded in the jacket.

12. Lead-through conduit according to any one of the foregoing claims, wherein the third conduit part has a relatively thick wall, as well as a lining of a material with a lower melting point than the material of the wall, and/or
wherein the lead-through conduit is further provided with at least one centring member arranged round the safety device or the lead-through sleeve.

13. Lead-through conduit according to any one of the foregoing claims, further comprising a cover element which surrounds the safety device and/or the lead-through sleeve and which has a greater diameter than the safety device or the lead-through sleeve, and optionally
wherein the safety device has at an end facing toward the control member a flange with a diameter greater than a diameter of a passage opening in the cover element.

14. Lead-through conduit according to claim 13, further provided with a retaining element which is displaceable over the lead-through conduit and which co-acts with the cover element, and optionally
wherein the cover element determines an internal volume and is provided with a filling opening for a filler.

15. Safety device for use in a lead-through conduit according to any one of the foregoing claims.
